# EUROPÄISCHE PATENTSCHRIFT

(11) **EP 1 346 784 B1**
(45) Veröffentlichungstag und Bekanntmachung des Hinweises auf die Patenterteilung: **18.06.2008**
(21) Anmeldenummer: 03003722.0
(22) Anmeldetag: 19.02.2003
(51) Int. Cl.: B22D 11/128

(54) **Führungsrolle für eine Stranggiessanlage**
Guiding roller for continuous casting machine
Rouleau de guidage pour installation de coulée continue

(30) Priorität: 19.03.2002 DE 10212056
(43) Veröffentlichungstag der Anmeldung: 24.09.2003
(73) Patentinhaber: SMS Demag AG, 40237 Düsseldorf (DE)
(72) Erfinder: Giertz, Klaus, 44879 Bochum (DE)
(74) Vertreter: Klüppel, Walter

(56) Entgegenhaltungen:
- DE-A- 2 911 624
- DE-A- 3 228 175
- FR-A- 2 545 891
- US-A- 3 965 974
- US-A- 4 000 553
- US-A- 4 164 252

## Beschreibung

Die Erfindung betrifft eine Führungsrolle für eine Stranggießanlage mit einem Rollenkörper, um den konzentrisch ein Rollenmantel angeordnet ist, wobei der Rollenkörper über mindestens ein Lager abgestützt ist.

Für eine Stranggießanlage ist neben einer durchgehenden endseitig gelagerten Führungsrolle auch eine mehrfach gelagerte Führungsrolle bekannt, die ein Abgießen von Strängen größerer Breite bei höheren Gießgeschwindigkeiten ermöglicht. Eine derartige mehrfach gelagerte Führungsrolle ist beispielsweise aus der DE 197 16 562 A1 bekannt. Die Führungsrolle der Stranggießanlage ist zum einen durch einen auf den Strang wirkenden Druck einer hohen mechanischen Wechselbeanspruchung und zum anderen aufgrund der Kontaktierung der Rollenoberfläche mit dem heißen Strang einer besonders hohen Temperaturbeanspruchung ausgesetzt. Daher wird die Führungsrolle üblicherweise mittels Wasser gekühlt. Trotzdem kann es zu einer thermischen Überbeanspruchung der Führungsrolle und somit deren Rollenkörper, Rollenmantel sowie den dazwischen angeordneten Lagern kommen.

Üblicherweise werden als Lager sogenannte Rollenlager angeordnet. Zur Schmierung des Lagers wird ein durch das umlaufende Lager gebildeter Ringraum mit einem Schmiermittel versehen. Infolge thermischer Überbeanspruchung kann es dazu kommen, dass das Lager austrocknet und blockiert. Darüber hinaus ist ein derartiges Rollenlager besonders stoßempfindlich. Insbesondere an Stellen der Führungsrolle, an welcher es aufgrund des Gewichts der Führungsrolle und der Anpresskraft des Gießstranges zu einer Durchbiegung der Führungsrolle und somit zu einer besonders hohen mechanischen Belastung kommt, ist ein an dieser Stelle angeordnetes Lager einer besonders hohen Stoß- und Temperaturbeanspruchung ausgesetzt.

Ausgehend von diesem Stand der Technik liegt der Erfindung die Aufgabe zugrunde, eine Führungsrolle anzugeben, welche besonders verschleißarm und schmutzunempfindlich ist.

Die Aufgabe wird erfindungsgemäß gelöst durch eine Führungsrolle für eine Stranggießanlage mit einem Rollenkörper, um den konzentrisch mindestens ein Rollenmantel angeordnet ist, wobei der Rollenkörper über mindestens ein Lager abgestützt ist, bei der das mit dem Rollenkörper verbundene Lager aus einem ringförmig segmentierten Gleitlager gebildet ist. Die Erfindung ist in Anspruch 1 definiert.

Die Erfindung geht dabei von der Überlegung aus, dass auch bei längerer Betriebsdauer eine möglichst verschleißarme Lagerung der Führungsrolle erreichbar ist, indem die Lagerung möglichst stoßunempfindlich und schmutzunempfindlich ausgebildet ist. Insbesondere verschmutzungsbedingte Materialbeeinträchtigung, die einerseits zum Verschleiß beitragen und andererseits das Spiel der Komponenten und somit die Stoßbeanspruchung erhöhen würden, sollten konsequent gering gehalten werden. Zur Reduzierung derartiger Materialbeeinträchtigungen sollte daher eine eine hohe Dichtigkeit aufweisende Lagerung des Rollenkörpers vorgesehen sein. Dazu ist eine möglichst formschlüssige Lagerung des Rollenkörpers vorgesehen. Hierzu wird mittels eines Gleitlagers durch relativ zueinander bewegte großen Wirkflächen eine weitgehend große Kraftübertragung ausgeführt. Dabei ist das Gleitlager formschlüssig zum Rollenkörper angeordnet. Um auch bei einer derartigen flächigen und somit gleitenden Lagerung des Rollenkörpers die durch die Belastungen der Wirkflächen hervorgerufene Reibung zu verringern, wird darüber hinaus ein Schmierstoff oder ein unter Druck stehendes Fluid zwischen den Wirkflächen eingeführt.

Das ist Gleitlager aus zwei Halbschalen gebildet. Dies ermöglicht eine besonders einfache Montage und Demontage des Gleitlagers um den einteilig oder mehrteilig ausgebildeten Rollenkörper. Zur Abdichtung des Gleitlagers gegenüber dem Rollenkörper ist vorzugsweise zwischen dem Gleitlager und dem Rollenkörper mindestens eine umlaufende Dichtung vorgesehen. In besonders vorteilhafter Ausführung ist die Dichtung als Lamellenring oder Labyrinth-Dichtung ausgebildet. Je nach Anforderung kann dabei der Lamellenring oder die Labyrinth-Dichtung einen oder mehrere gewundene Ringe oder Wicklungen aufweisen. Durch eine derartig gute Abdichtung des das Schmiermittel führenden Ringraumes ist der Schmiermittelverbrauch weitgehend reduziert.

Bevorzugt ist das ringförmig segmentiert ausgebildete Gleitlager in Längsrichtung des Rollenkörpers gesehen mittig angeordnet. Hierdurch ist sichergestellt, dass an der Stelle, an welcher die größtmögliche Streckenlast auf dem Rollenkörper und somit auf dem diesen abstützenden Lager ruht, eine möglichst stoßunempfindliche und schmutzunempfindliche Lagerung des Rollenkörpers gegeben ist.

Die mit der Erfindung erzielten Vorteile bestehen insbesondere darin, dass durch das als ringförmig segmentiertes Gleitlager ausgebildete Lager zur Stützung des Rollenkörpers ein besonders guter Formschluss gegeben ist, wodurch ein zuverlässiger Schutz gegen Verunreinigungen und somit eine besonders hohe Schmutzunempfindlichkeit gewährleistet ist. Darüber hinaus ist durch das Gleitlager ein Formschluss zu dem Rollenkörper mit einer möglichst wirksamen Kraftübertragung gegeben, wodurch ein besonders stoßunempfindliches Lager ermöglicht ist. Durch die Ausführung des Lagers in der Art eines Gleitlagers ist eine hochwertige gleitende Lagerung des Rollenkörpers mit einer vergleichsweise langen Betriebsdauer selbst in hochgradig verschmutzter Atmosphäre ermöglicht. Bedingt durch die ringförmig segmentierte Anordnung des Gleitlagers um den Rollenkörper ist ferner eine einfache und schnelle Montage gegeben.

Ein Ausführungsbeispiel der Erfindung wird anhand einer Zeichnung näher erläutert. Darin zeigen:
- Figur 1: schematisch eine Führungsrolle einer Stranggießanlage mit zur Abstützung eines Rollenkörpers vorgesehenen Lagern im Längsschnitt und
- Figur 2: schematisch einen Ausschnitt 1 der Figur 1 im Längsschnitt.

Gleiche Teile sind in allen Figuren mit den selben Bezugszeichen versehen.

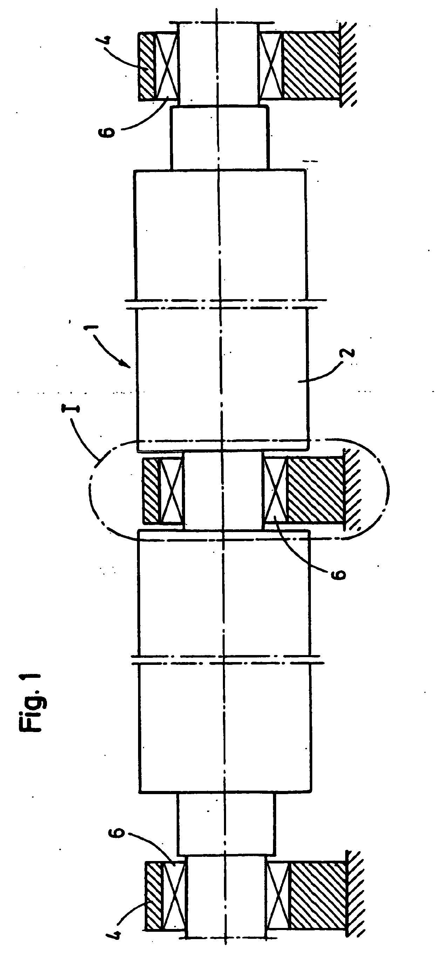

Figur 1 zeigt eine Führungsrolle 1 einer Stranggießanlage mit einem durchgehenden Rollenkörper 2, um den konzentrisch ein Rollenmantel angeordnet ist. Je nach Art und Ausführung können der Rollenkörper und der Rollenmantel ein- oder mehrteilig ausgeführt sein. Zur Abstützung des Rollenkörpers 2 sind endseitig zwei Lager 6 und in Längsrichtung des Rollenkörpers 2 gesehen ein mittig angeordnetes Lager 6 in einem Lagergehäuse 4 vorgesehen.

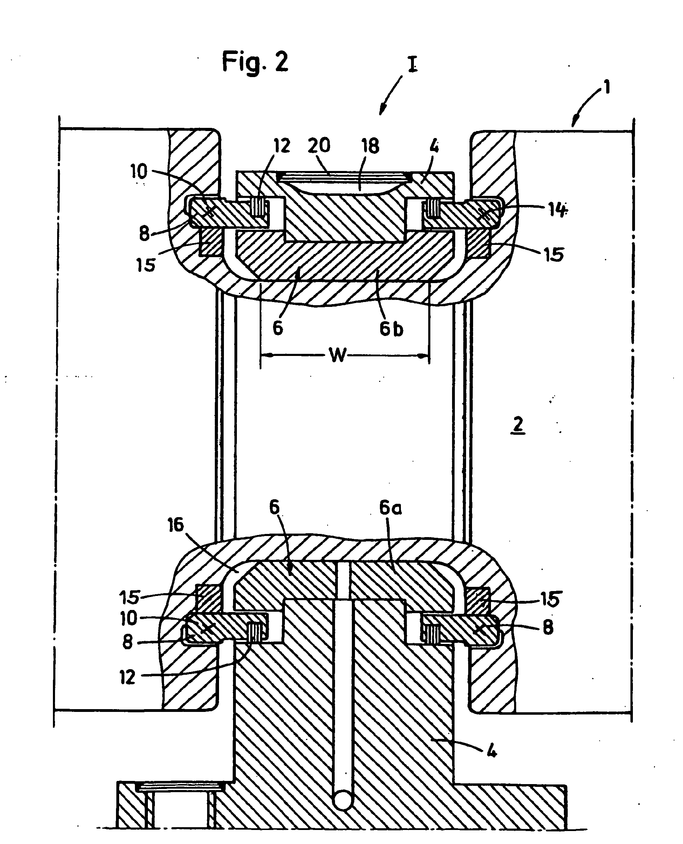

In der Figur 2 ist ein Ausschnitt I der Figur 1 näher dargestellt, in welchem das mittig angeordnete Lager 6 näher beschrieben wird. Für eine möglichst gute Stoßunempfindlichkeit und Schmutzunempfindlichkeit ist das Lager 6 als ein ringförmig segmentiertes Gleitlager ausgebildet. Bevorzugt ist das Lager 6 aus zwei um den Rollkörper 2 angeordneten Halbschalen 6a und 6b gebildet. Die beiden Halbschalen 6a und 6b des Gleitlagers oder Lagers 6 werden beispielsweise mittels Schrauben miteinander verschraubt. Das Lager 6 ist in dem Lagergehäuse 4, welches ebenfalls ringförmig segmentiert ausgebildet sein kann, angeordnet. Zur Abdichtung gegenüber dem Rollenkörper 2 ist zwischen dem Gleitlager 6 und dem Rollenkörper eine umlaufende Dichtung 8 vorgesehen. Die ebenfalls ringförmige Dichtung 8 ist bevorzugt aus einer Labyrinth-Dichtung gebildet. Das heißt, die im Ring 10 angeordnete Dichtung 8 ist durch mindestens eine umlaufende Wicklung 12, welche als Dichtlippe dient, gebildet. Eine derartige Dichtung 8 wird auch als Lamellenring bezeichnet. Die Ringhälften 10 sind mittels Befestigungselemente 14, zum Beispiel Schrauben, miteinander verbunden. Unterhalb des Ringes 10 der Dichtung 8 ist ein Haltering 15 angeordnet, der die Ausnehmung bzw. die Ausdrehung im Rollenkörper 2 ausgleicht. Bei eineranders ausgeführten Montage kann dieser Haltering ggf. entfallen.

Beim Betrieb der Stranggießanlage wird mittels des als Gleitlager ausgebildeten Lagers 6 eine weitgehend formschlüssige Lagerung des Rollenkörpers 2 ermöglicht, wodurch eine weitgehend große Wirkfläche W zur Kraftübertragung gebildet ist. Zur Schmierung des Lagers 6 ist zwischen dem Lager 6 und dem Rollenkörper 2 ein Ringraum 16 gebildet, in welchem Schmiermittel eingeführt wird. Bedingt durch die sehr hohe thermische Beanspruchung des Lagers 6 und dessen Lagergehäuses 4 weist das Lagergehäuse eine Ausfräsung oder eine Nut 18 zum Führen von Kühlmittel, zum Beispiel Wasser, auf. Die Nut 18 bildet somit einen Kühlkanal und ist mit einer Platte 20 zum Schutz vor Verschmutzung abgedeckt. Je nach Art und Ausführung der Stranggießanlage ist darüber hinaus der Rollenkörper 2 in nicht dargestellter Art und Weise mit Wasser gekühlt.

### Bezugszeichenliste

- 1: Führungsrolle
- 2: Rollenkörper
- 4: Lagergehäuse
- 6: Lager
- 6a, 6b: Halbschalen
- 8: Dichtung
- 10: Ring
- 12: Wicklung
- 14: Befestigungselemente
- 15: Haltering
- 16: Ringraum
- 18: Nut
- 20: Platte

- W: Wirkfläche

## Patentansprüche

1. Führungsrolle (1) für eine Stranggießanlage mit einem Rollenkörper (2), um den konzentrisch mindestens ein Rollenmantel angeordnet ist, wobei der Rollenkörper (2) über mindestens ein Lager (6) abgestützt ist,
**dadurch gekennzeichnet,**
**dass** das mit dem Rollenkörper (2) verbundene Lager (6) als ein ringförmig segmentiertes Gleitlager ausgebildet ist,
wobei das Gleitlager (6) aus zwei Halbschalen (6a, 6b) gebildet ist und
**dass** zwischen dem Gleitlager (6) und dem Rollenkörper (2) mindestens eine umlaufende Dichtung (8) vorgesehen ist.

2. Führungsrolle nach Anspruch 3,
**dadurch gekennzeichnet,**
**dass** die Dichtung (8) als Labyrinthdichtung ausgebildet ist.

3. Führungsrolle nach einem der Ansprüche 1 bis 4,
**dadurch gekennzeichnet,**
**dass** das Lager (6) in Längsrichtung des Rollenkörpers (2) gesehen mittig angeordnet ist.

## Claims

1. Guide roller (1) for a continuous casting plant with a roller body (2), about which at least one roller casing is concentrically arranged, wherein the roller body (2) is supported by way of at least one bearing (6), **characterised in that** the bearing (6) connected with the roller body (2) is constructed as an annular, segmented slide bearing, wherein the slide bearing (6) is formed from two half shells (6a, 6b) and that at least one encircling seal (8) is provided between the slide bearing (6) and the roller body (2).

2. Guide roller according to claim 3, **characterised in that** the seal (8) is constructed as a labyrinth seal.

3. Guide roller according to one of claims 1 to 4, **characterised in that that** bearing (6) is arranged centrally as seen in longitudinal direction of the roller body.

## Revendications

1. Rouleau de guidage (1) pour une installation de coulée continue avec un corps de rouleau (2), autour duquel est disposée, concentriquement, au moins une enveloppe de rouleau, le corps de rouleau (2) étant supporté via au moins un palier (6), **caractérisé**
**en ce que** le palier (6) relié avec le corps de rouleau (2) est réalisé sous forme d'un palier lisse segmenté en forme d'anneaux,
le palier lisse (6) étant formé de deux demi-coquilles (6a, 6b) et
**en ce qu'**au moins un joint d'étanchéité (8) périphérique est prévu entre le palier lisse (6) et le corps de rouleau (2).

2. Rouleau de guidage selon la revendication 3, **caractérisé**
**en ce que** le joint d'étanchéité (8) est réalisé sous forme de joint à labyrinthe.

3. Rouleau de guidage selon l'une quelconque des revendications 1 à 4, **caractérisé**
**en ce que** le palier (6) est disposé au centre, en regardant dans le sens longitudinal du corps de rouleau (2).
